# EUROPEAN PATENT SPECIFICATION

(11) **EP 1 656 016 B1**
(45) Date of publication and mention of the grant of the patent: **01.11.2017**
(21) Application number: 04781860.4
(22) Date of filing: 23.08.2004
(51) Int. Cl.: A01K 5/01

(54) **A PET FOOD CONTAINER**
HAUSTIERFUTTERBEHÄLTER
CONTENANT POUR ALIMENT DESTINE A UN ANIMAL DE COMPAGNIE

(30) Priority: 22.08.2003 US 646124; 19.12.2003 US 741459
(43) Date of publication of application: 17.05.2006
(73) Proprietor: IAMS Europe B.V., 7742 PB Coevorden (NL)
(72) Inventor: TUCKER, Lewis, Alexander, Fairfield, OH 45014 (US); ZIMMER, Gregory, Alan, Cincinnati, OH 45202 (US); MARCUS, Wayne, Stuart, Fairfield, CT 06824 (US); MORGAN, Ann, Kathleen, Okeana, OH 45053 (US)
(74) Representative: Zimmermann & Partner Patentanwälte mbB
(86) International application number: PCT/US2004/027255
(87) International publication number: WO 2005/018312

(56) References cited:
- WO-A-96/09968
- WO-A1-93/08018
- GB-A- 298 786
- GB-A- 912 839
- US-A- 3 394 861
- US-A- 4 798 173
- US-A- 5 209 184

## Description

### FIELD OF THE INVENTION

The present invention relates to containers containing a pet food. The invention further relates to methods for preparing pre-packaged pet foods.

### BACKGROUND OF THE INVENTION

A variety of pet food containers and pet food products currently exist. Pet food products have been largely adapted to be palatable and appealing to a pet. However, the need for consumers to visually inspect pet food products prior to purchase has not been largely considered in the art. In many current products, a pet owner is unable to inspect the quality and appeal of the pet food prior to purchasing and opening a product. Typically, pet food that is concealed in containers is unappealing to consumers once the container is opened for feeding.

Developments in the field of pet food containers have taken many forms. Reclosable and resealable containers have been disclosed in a variety of patents. For example, a pet food container with a removable cover is disclosed in U.S. Patent No. 4,798,173, disclosing a pet dish with an integral coolant for keeping food cool and a transparent cover for the pet to see the food. In accordance with this patent, pet food is placed into the container by the consumer, and the transparent portion is used specifically for the pet to access the food. Further disclosures of pet food containers with a cover are set forth in U.S. Patent Nos. 5,209,184; 5,458,087; 5,560,315; and 5,887,749, which all disclose a pet dish with a cover used for the purpose of storage and transportation.

A peelable freshness seal is disclosed in U.S. Patent Nos. 3,344,974; 3,391,861; 3,394,861; and 4,574,174. In U.S. Patent No. 4,574,174, the sealing means disclosed is for a microwave oven convenience meal to prevent pet food from escaping while cooking and to maintain the freshness of the pet food. U.S. Patent No. 3,394,861 discloses a container to store pet food, with a peelable sealing material that can be placed over the contents to preserve them once the user has placed contents inside the container. U.S. Patent No. 3,344,974 discloses a container with a hermetic seal around the open mouth of the container to maintain freshness, but does not disclose a means for viewing food prior to breaking the seal. U.S. Patent No. 3,391,847 discloses a disposable bowl with a cover and a sealant above the cover.

U.S. Patent No. 4,798,173 discloses a freezable coolant that maintains a constant temperature long enough to preserve food that is placed into the container by the consumer specifically for the pet to feed. In a particularly preferred embodiment of the present invention, the container does not comprise such a coolant, as the pet food is within the container prior to purchase and freshness is maintained in the preferred embodiment by a freshness means. U.S. Patent No. 4,798,173 discloses a freezable coolant that maintains a constant temperature long enough to preserve food that is placed into the container by the consumer specifically for the pet to feed. In a particularly preferred embodiment of the present invention, the container does not comprise such a coolant, as the pet food is within the container prior to purchase and freshness is maintained in the preferred embodiment by a freshness means.

Pouches containing wet and dry pet food are well-known in the art. However, these pouch housing forms for pet food create several problems. First, the pouches generally are not recloseable, resulting in a waste of food if the entire contents are not used. In addition, wet food in a plastic pouch tends to stick to the walls of the pouch and also to the crevaces formed in the corners of the pouch. Plastic pouches cause a difficulty in removing product from the pouches and results in wastage of pet food.

Other embodiments of pet food housing devices include bags. The use of bags is generally most feasible with dry pet food and may not provide a means for secure reclosure of the bag once it is opened.

Through significant efforts, the present inventors have found that there is a need for a pet food container which allows consumers to view an appealing moist pet food product through a substantially transparent portion of the container prior to purchase. In the preferred embodiment of the current invention, the pet food is complete and nutritionally balanced. A variety of efforts have been made in the current invention to provide a container that maintains the freshness of a pet food, yet is visible to consumers prior to purchase and is recloseable to prevent wastage of food.

The present invention provides containers and methods for providing and easily dispensing of pet food, such that at least a part of the pet food can be viewed prior to purchasing the product. To this end, a pet food container including pet food is provided. In the preferred embodiment the container includes a receptacle for a complete and nutritionally balanced wet pet food, a means of maintaining the freshness of the pet food, a recloseable cover, a substantially transparent portion for viewing at least a part of the pet food prior to purchase of the container, and a container shaped such that wet pet food can be easily removed from the container without adhering to the corners or walls of the container.

Additional features and advantages of the present invention will be described in and apparent from the detailed description of the various embodiments of this invention.

### SUMMARY OF THE INVENTION

The present invention is directed to containers for containing pet food. The containers comprise a body which forms a receptacle, pet food maintained within the receptacle, a means for maintaining freshness of said pet food at an ambient temperature for storage, and a substantially transparent portion of such container which allows at least a part of the pet food to be viewed. The invention is further directed to methods of producing a pre-packaged food as further described herein.

### BRIEF DESCRIPTION OF THE DRAWINGS

Figure 1 is a perspective view of an embodiment of the container in accordance with the present invention, with the cover in an open position and the seal removed from the body of the container.
Figure 2 is a perspective view of an embodiment of a sealed container in accordance with the present invention, with a transparent portion on a sidewall of the body of the container.
Figure 3a is a top plan view of an embodiment of the container, showing the cross-section cut line 3b-3b.
Figure 3b is a cross-sectional view of the embodiment of Figure 3a, taken along line 3b-3b, depicted in Figure 3a, along line 3b-3b.
Figure 4 is a top plan view of an embodiment in accordance with the present invention showing a transparent portion in the cover and the seal for viewing pet food.
Figure 5 is a perspective view of a square shaped version of an embodiment of the container in accordance with the current invention, with the cover in an open position and the seal removed from the body of the container.
Figure 6 is an exploded view of a square shaped version of an embodiment of the container in accordance with the current invention, with the cover and the seal removed from the body of the container.
Figure 7 is an exploded view of a round shaped version of an embodiment of the container in accordance with the current invention, with the cover and the seal removed from the body of the container.
Figure 8 is a perspective view of three containers of an embodiment in accordance with the current invention, with the containers aligned through the center for stacking the containers.
Figure 9 is a perspective view of three containers of an embodiment in accordance with the current invention, with the containers stacked.

### DETAILED DESCRIPTION OF THE INVENTION

The present invention relates to a pet food container comprising a body which forms a receptacle, a pet food maintained within such receptacle, a means for maintaining freshness of the pet food when stored at ambient temperature, and a substantially transparent portion such that at least a part of the pet food can be viewed prior to purchase or use of the container.

The container body may be of any desired shape and size to accommodate pet food. Accordingly, the containers have different lengths, widths and depths. The sizes of the containers of the current invention can also vary to conform to pet food. In one embodiment of the invention, the containers are configured to contain 3 ounces, 6 ounces, or 12 ounces of pet food. Containers configured to contain from about 2 ounces to about 20 ounces of pet food can also be readily formed and any larger or smaller sized containers to accommodate pet food is a further embodiment that is disclosed in the current invention.

The containers herein further comprise a means for maintaining freshness of the pet food held within the receptacle, when stored at ambient temperature. In one embodiment, a seal, such as a hermetic seal or a rim seal, is used to maintain freshness of pet food in the container of the current invention. Alternatively or additionally, a cover may be utilized to maintain freshness of such food.

In the present invention, the container further comprises a substantially transparent portion which allows at least a portion of the pet food therein to be viewed. For example, the substantially transparent portion may be molded into the body, seal, cover, or other like parts of the container.

As used herein, the term "substantially transparent," with reference to a portion of the container, means that light is transmitted through such portion such that at least a part of the pet food can be viewed. The substantially transparent portion will be apparent as viewed by the eye for visual inspection of pet food within the container. As also used herein, "portion," with reference to the substantially transparent portion, means either a part of, or all of, the container or any individual feature of the container is substantially transparent. In one embodiment, the substantially transparent portion is a part of an individual feature of the container, such as a seal, a sidewall, the base structure, or cover of the container, or combinations thereof. For example, in one embodiment, both a seal and a cover of the container comprise a substantially transparent portion for viewing the pet food.

As also set forth herein, the container comprises pet food that is maintained within the receptacle of the container. The pet food can be any pet food, such as dry pet food, semi-moist pet food, or wet pet food. In a preferred embodiment, the pet food is a complete and nutritionally balanced food as defined herein. The term "complete and nutritionally balanced" pet food is defined as a food having all known required nutrients in proper amounts and proportion based upon recommendations of recognized authorities in the field of animal nutrition. As such, the food may be compounded to be fed as the sole ration and a complete and balanced pet food is capable of maintaining life and/or promote production without any additional substance being consumed, except for water. More than one pet food can be maintained within the container of the current invention, a wall extending from the base structure into the receptacle of the container can be used to separate two or more types of pet food in a single container.

In the preferred embodiment of the current invention a plastic container with a substantially transparent portion on the cover of the container is described in detail below.

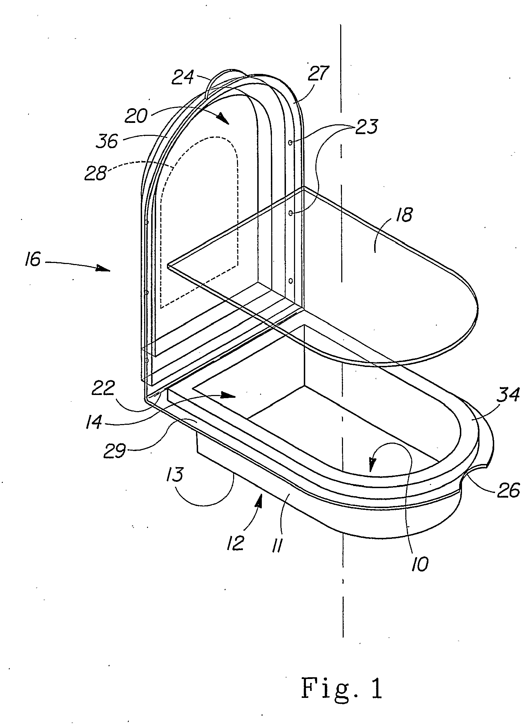

A shaped, plastic container for sealing pet food in accordance with the present invention, illustrated in FIG. 1, includes a body 12 of a container with a receptacle member, generally designated as 10, that is designed to house a quantity of pet food. The container shown in FIG. 1 has been chosen as the preferred embodiment that provides a substantially stress-free condition that maximizes strength imparted to the container and ease of opening and closing the container. The body 12 of the container is composed of a base structure 13 having peripherally continuous side walls 11. A receptacle 10 for holding pet food is formed in the space above the base structure 13 by peripheral sidewalls 11. At the top of peripheral sidewalls 11 is body rim 29. Body extension 34 extends upwardly from body rim 29 and is dimensioned to be securely engaged by cover flange 36 for firm closure of the container. Open mouth 14 is formed opposite to the base structure 13 of the container and is hermetically sealed with a seal designated as 18. The seal 18 is adhesively affixed to body extension 34, such that open mouth 14 is hermetically sealed. The seal 18 maintains freshness of pet food at an ambient temperature and when removed, seal 18 provides access to pet food within the receptacle 10. A cover 16 is provided and adapted to cooperate with the seal 18. A substantially transparent portion 20, can be located on any place on the container of the present invention, and is shown generally in FIG. 1. In the preferred embodiment shown in FIG. 1, the substantially transparent portion 20 is on at least a portion of the cover 16 of the container. In this embodiment, a substantially transparent portion is aligned with the substantially transparent portion on seal 18 to the extent that pet food within the receptacle 10 can be readily viewed by a consumer prior to purchase, through both cover 16 and seal 18. According to the invention, the container further comprises a hinged mechanism 22 disposed between and affixed to a portion of the body 12 and a portion of the cover 16. In the preferred embodiment, illustrated in FIG. 1, the cover 16 is attached to the body of the container 12 by the hinged mechanism 22. The hinged mechanism 22 may be made from a crimping device, a welding device, a taping device, by mechanical locking mechanisms and any further variations thereof. The hinged mechanism 22 of the preferred embodiment allows for ease of opening and closing the cover 16. In the preferred embodiment as shown in FIG. 1, cover rim 27 is constructed to frictionally retain body rim 29 upon closure of the container. Cover flange 36 is provided to firmly engage body extension 34 when the container is closed. In addition, when the container in the preferred embodiment is being closed, a snapping noise allows a consumer to be ensured that the container is properly closed. Interference locking devices 23 on cover rim 27 provide for a specific sound to be audible by the pet when the container is opened. A tab 24 on the cover 16 provides a convenient handle to open and close the container generally. The tab 24 can be located anywhere on the cover. In the preferred embodiment shown in Figure 1, recess 26 is provided on the body rim 29 for easier access to tab 24 when the container is closed.

Also illustrated in FIG. 1, one or more labels 28 may be included in order to satisfy marketing and labeling needs and requirements. When desired, one or more of any such label 28 can be itself substantially transparent, except, of course, for the message indicia that needs to be opaque or translucent or contrasting in order to be visible to the consumer.

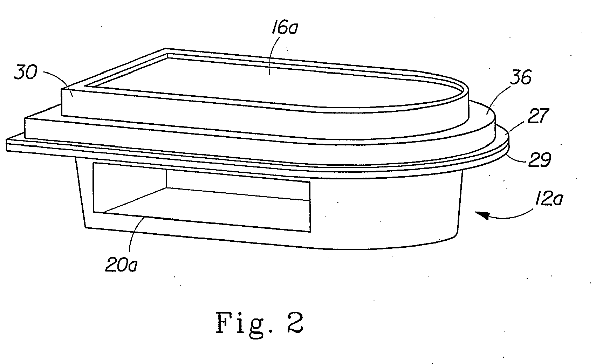

Another embodiment of the present invention is illustrated in FIG. 2 of the drawings, and is generally similar to the previous embodiment as indicated by the use of identical reference numerals with the suffix *a* for similar parts. FIG. 2 illustrates a perspective view whereby the body of the container 12*a* is closed by cover 16*a*. The cover 16*a* is opaque in this embodiment and the substantially transparent portion 20*a* is on at least a portion of the body 12*a* of the container. A pet food product within the container can be viewed through substantially transparent portion 20*a*. The cover 16*a* in FIG. 2 contains a wrap around portion 30 that forms an elevated flat surface on the cover 16*a*, and is dimensioned such that the containers can be stacked together. In addition, body 12*a* is slightly narrowed for easy stacking of the containers with the elevated flat surface on the cover 16*a*. Cover flange 36 is shown firmly engaging body extension 34 and cover rim 27 is shown firmly receiving body rim 29 in the closed container of FIG. 2. Wrap around portion 30 is provided for stacking the containers of the present invention and is shown in FIG 2.

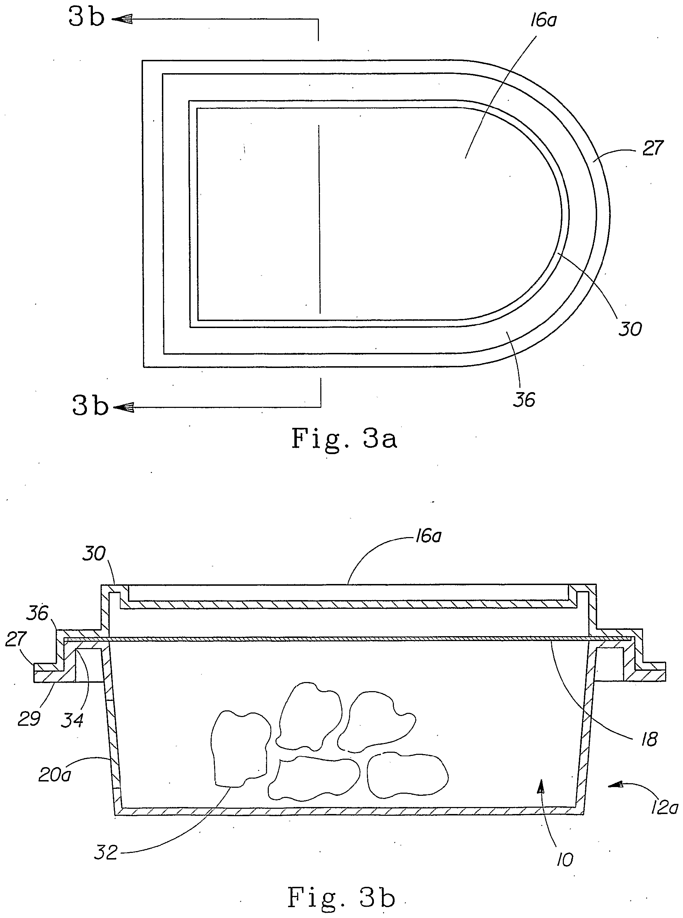

FIG. 3a is a top plan view showing generally the cover 16a, wrap around portion 30 dimensioned for receiving the base structure for stacking of the containers, cover flange 36 and cover rim 27 for firm closure of the container in an embodiment of the invention. Line 3b-3b is provided showing the cut made for the cross sectional view shown in FIG. 3b.

FIG. 3b indicates identical reference numerals with the suffix *a* for parts similar to previous embodiments. FIG. 3b shows a cross-sectional view of the preferred embodiment of the current invention. Cover 16*a* is closed upon the body of the container 12*a*. Cover rim 27, as shown in FIG. 3b, is constructed to frictionally retain body rim 29 when the container is closed. Cover flange 36 is also shown in the cross-sectional view of FIG. 3b firmly engaging body extension 34 in the closed container. Also shown in FIG. 2 is substantially transparent portion 20*a* on at least a part of body 12*a* allowing pet food 32 which is contained in receptacle 10 of the container, to be viewed. Pet food 32 is hermetically sealed by seal 18 in this embodiment. Seal 18 maintains the freshness of the pet food 32. Cover 16*a* is reclosable on body 12*a* and wrap around portion 30 is provided for stacking the containers of the present invention.

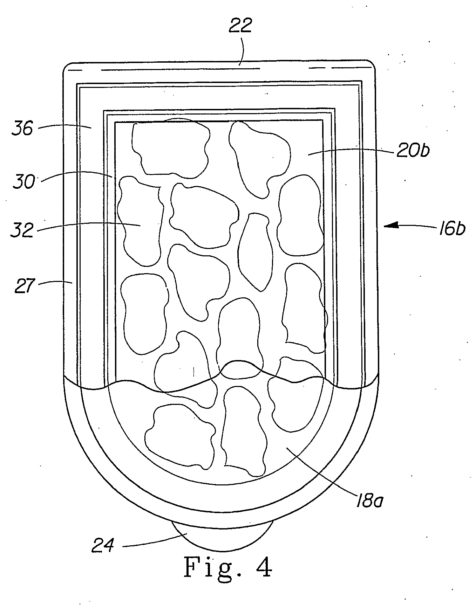

Another embodiment of the present invention is illustrated in FIG. 4 of the drawings, and is generally similar to previous embodiments as indicated by the application of identical reference numerals with the suffix *a* and *b* showing similar parts. FIG. 4 illustrates a top plan view of the preferred embodiment of the invention. The cover 16*b* is attached to the body of the container in a hinged mechanism 22. Cover *16b* has, at least in part, a substantially transparent portion 20b that allows consumers to view pet food 32 within the container. Pet food 32 is hermetically sealed in the container as is illustrated in FIG. 4 with a seal 18*a*. Seal 18*a* is at least in part substantially transparent such that pet food 32 can be viewed through both cover 16b and seal 18*a*. Wrap around portion 30 for stacking the containers, cover flange 36 and cover rim 27 for secure closure of the container and tab 24 for ease of opening the container, are shown generally in FIG. 4.

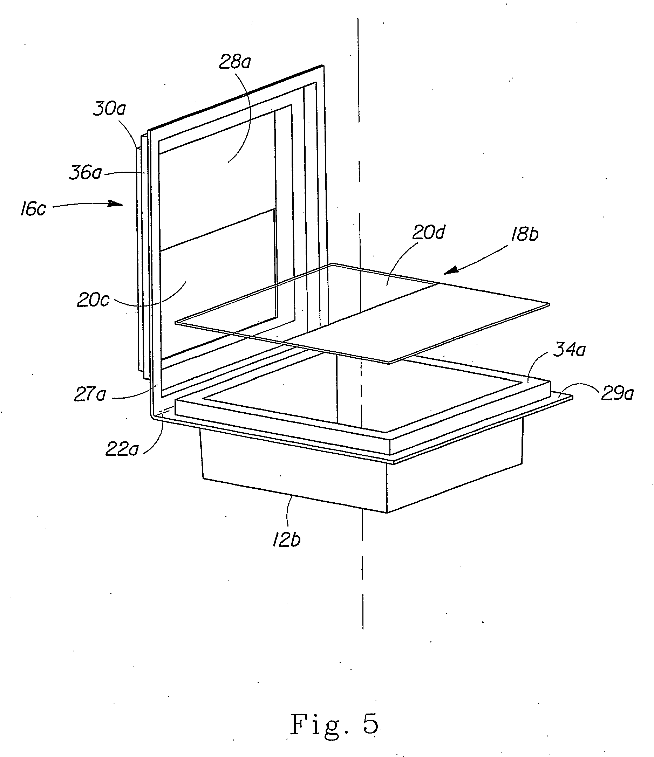

FIG. 5, utilizes identical reference numerals and suffixes *a, b,* and c for components that are generally similar to previous embodiments. FIG. 5 illustrates an embodiment of the invention wherein the container is molded into a square shape and is shown in an open position with the seal removed from the body 12b of the container. The cover 16c and the seal 18*b* both have, at least in part, substantially transparent portions 20c and 20*d*, respectively, aligned with each other to allow consumers to view pet food within the container. FIG. 5 illustrates an embodiment of the container wherein the cover 16c is attached to the body 12*b* of the container in a hinged mechanism 22*a* to allow for ease of opening and closing the container. Wrap around portion 30*a* forms an elevated flat surface on cover 16c that meetingly receives the narrowed body *12b* such that the containers can be stacked. Cover flange *36a* and cover rim 27*a* are provided to firmly retain body extension 34*a* and body rim 29*a*, respectively. Label 28*a* can be on any part of the container, in FIG. 5, the label is shown on the cover 16*c*.

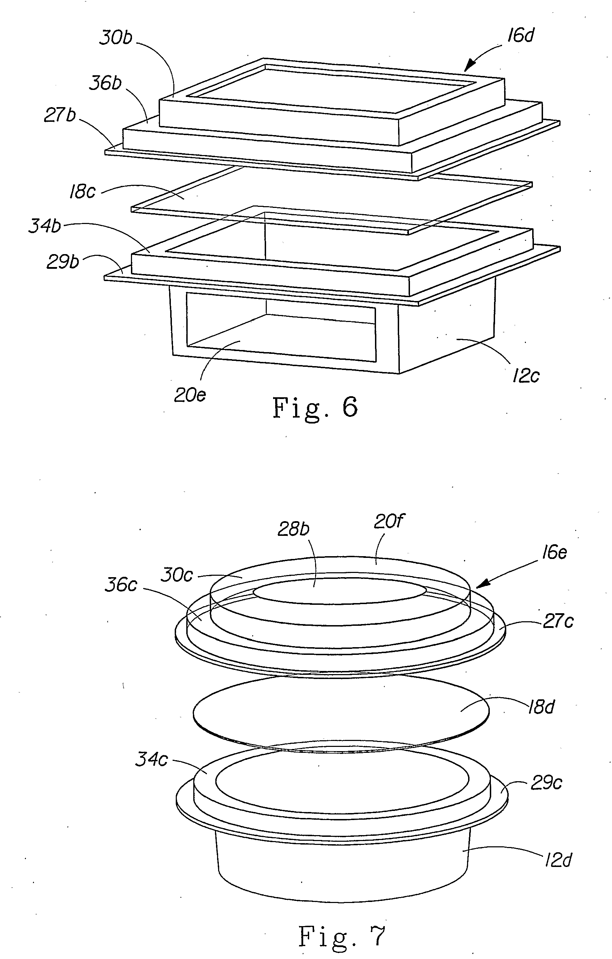

FIG. 6 utilizes identical reference numerals and suffixes *b, c, d* and *e* for components that are generally similar to previous embodiments. FIG. 6 illustrates a square shaped version of the current invention with a substantially transparent portion 20e at least in part on the body 12*c* of the container. In this embodiment cover 16*d* can be removed from the body 12*c* of the container. Cover rim 27*b* is constructed to firmly engage body rim 29b and cover flange 36b is designed to firmly cooperate with and engage body extension 34b, as shown in FIG. 6. Wrap around portion 30b is shown such that the containers can be stacked. Removable seal 18*c* is also shown in FIG. 6, to hermetically seal pet food in the container.

FIG. 7 utilizes identical reference numerals and suffixes *b,* c, *d, e* and *f* for components that are generally similar to previous embodiments. FIG. 7 illustrates a round shaped version of the current invention. The cover, shown as 16*e*, is similar to previous embodiments disclosed and is removable from the body of the container 12*d*. Cover rim 27*c* is constructed to provide firm closure when combined with body rim 29*c* and cover flange 36*c* is constructed to tightly engage body extension 34*c*. A substantially transparent portion is shown as 20*f* at least in part on cover 16e and the seal 18*d* also has a substantially transparent portion such that pet food can be viewed in the container through both substantially transparent portion 20*f* on cover *16e* and through seal 18*d*. A wrap around portion 30*c* on cover 16e are dimensioned for receiving the base structures such that the containers can be stacked. Label 28b can be anywhere on the container of the present invention, in FIG. 7 label 28*b* is shown on cover 16e.

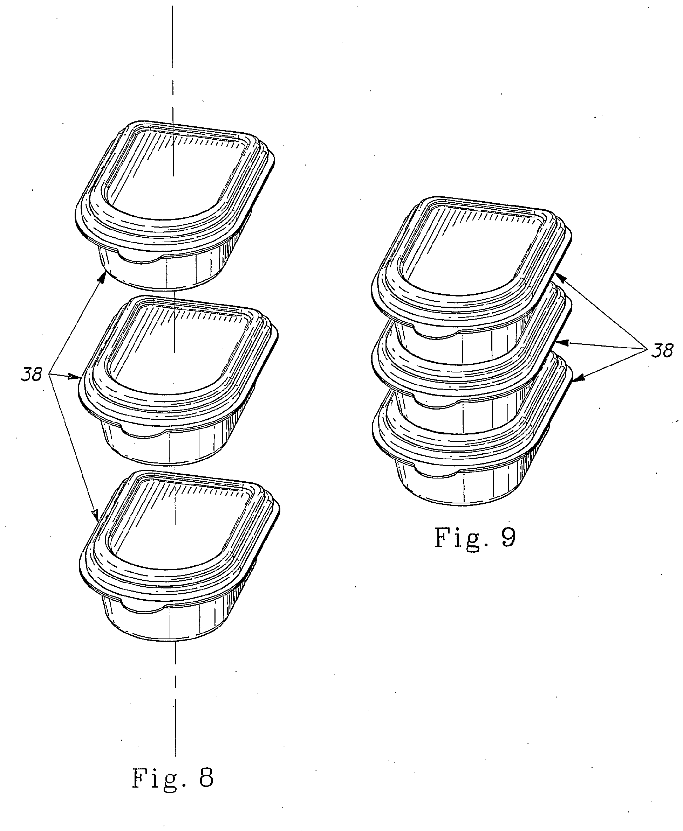

FIG. 8 illustrates three containers 38 of the preferred embodiment of the current invention aligned through the centers for the purpose of showing stackability of the containers. In accordance with the stackable feature of the containers 38 of the current invention, FIG. 9 demonstrates that the containers 38 can be sold as a kit. In addition, the stackable feature shown in FIG. 8 and FIG. 9 allows for easy storage of more than one of the pet food containers 38.

The containers, and the various parts thereof, may be made of any of a variety of materials. For example, plastic, paperboard, metal, and the like may be used. For example, plastic sheets are used to form the containers of the present invention. The plastic sheets that may be used for the present invention include, but are not limited to, low, medium and high density polyethylene, ethylene vinyl acetate, ethylene acrylic acid, ethylene methyl acrylic acid, ethylene vinyl alcohol, surlyn, nylon, polypropylene, polystyrene, polyester and combinations thereof. The thickness of the plastic used to produce the present invention varies. In the preferred embodiment, the plastic is about 30 mil Plastics of any thickness that can be used to form the present invention is disclosed, including plastics ranging from about 10 mil to about 90 mil in thickness.

The containers may be made by any of a variety of processes that will be well-known to one of ordinary skill in the art. For example, there are several preferred processes to manufacture the containers, referring to the body of the container, the peripherally continuous sidewalls and the cover, of the present invention. First, it has been found desirable to mold containers from a thermoform molding. The process of thermoforming stretches plastic sheets into a three-dimensional part, exemplified by the three dimensional container shown in FIG. 1. Thermoforming is performed by preheating a flat sheet of plastic and then bringing the plastic into contact with a mold whose shape it takes. The molding process can be accomplished by vacuum, pressure and/or direct mechanical force. Since the total area of the part or molded product is greater than the area of the starting plastic sheet, a reduction in the thickness of the starting sheet occurs from stretching the sheet to an increased surface area. This narrowing of the plastic sheet provides for improved stackability of the containers with the elevated flat surface formed on the covers. The greater the formed parts area compared to the original sheet area, the thinner the formed parts walls and base structure will be.

Thermoforming can also be used to form containers with several layers of the same or different plastics that can be thermoformed into the same molding to produce a multi-layered product. A multi-layered product can also be produced by thermoforming plastics on top of each other and allowing the plastics to cool to form consecutive plastic layers. In another method, layers can be laminated together to produce multi-layered parts or products. A tie can be used to combine the layers.

In an embodiment of the present invention, the body of the container 12, illustrated in Figure 1, is a multi-layered plastic container. The body of the container is thermoformed into a multi-layered body with a sealant layer, a barrier layer and an outer layer, respectively configured from the inner layer to the outer layer of the container. In this embodiment of the current invention ethylene vinyl alcohol (EVOH) is the preferred plastic to be used in the barrier layer and polypropylene is the preferred plastic to be used in the outer layer and the sealant layer. A variety of other plastics and numbers of layers can be used in further embodiments of the current invention.

Blow molding is another technique that can be used to produce a wide range of hollow, thin-walled one-piece parts, including the containers of the current invention. Generally, blow molding is performed by melting a desired plastic in an extruder and punching the plastic through a die to produce a tube. A mold with the desired cavity shape closes around the plastic tube, pinching shut one end and clamping the other end around a blow pin. Simultaneously the plastic tube is cut from the extruder. Air is then blown into the plastic tube and the tube expands and stretches into the shape of the cavity. Water is then passed through the mold and cools the plastic until it holds the mold shape, a container is thus formed.

The seal 18 as shown in FIG. 1, is affixed to the open mouth 14 of the body of the container 12 thereby sealing a pet food product within the container. The seal can be made of a combination of layers of plastic. In an embodiment of the current invention the seal is made of three layers. A sealant layer on the inside is made of polypropylene. Also in the preferred embodiment a barrier layer is preferably made of ethylene vinyl alcohol (EVOH), silica or aluminum and the outer layer of the container is preferably made of polypropylene. A variety of other plastics and numbers of layers can be used in other embodiments of the current invention to form the seal.

The substantially transparent portion, which can be located anywhere on the container and may require transparency of the seal 18, as shown in FIG. 1, can be made by either starting with a transparent plastic sheet such as polypropylene or by using a plastic that can easily take on a transparency portion, such as ethylene vinyl alcohol. To have partial transparency in any part of the container, colorants can be used to form opaque portions on a transparent plastic sheet. In another method, a transparent plastic can be pre-registered into a colored or opaque plastic sheet before the molding process is performed, thereby allowing a portion to be on any part of the molded container.

Once sealed, in certain embodiments herein, a retort process may be used to cook and sterilize the food. In the preferred process, as a first step, the food is cooked in the container, which is then sealed and subjected to the retort process for further cooking and for sterilization. In a retort process, a retort basket is typically filled with water and containers are placed into the water. Once a retort machine is fully loaded with containers, the water is replaced by steam and the containers are cooked at a correct pressure and temperature. In the preferred embodiment of the current invention, the preferred pressure exerted on the containers in the retort process is from about 20psi to about 30psi, and a cooking and sterilizing time of from about 20 minutes to about 30 minutes. The time for cooking and sterilizing pet food in the retort machine will vary depending on the size of the container, the amount of pet food and the amount of cook time given to the pet food before the retort process was started. Come up time, or time for the retort machine to reach desired cooking temperatures and cool down time can also contribute to the time for cooking and sterilizing pet food that is sealed in the container of the current invention. In order to withstand the retort process it is preferred that the container is able to withstand the pressurized cooking process, including the body of the container, the seal and the cover. Overpressurizing of the containers in the retort machine can prevent less rigid plastics from breaking during the retort process. Rigid or semi-rigid plastic are therefore preferred to withstand the pressurized cooking process. After cooking, a retort machine is often filled with water and pressure cooled. In a final stage temperature is constantly monitored and the containers are discharged from the retort machine after cooling.

A method of producing a pre-packaged pet meal is disclosed in the present invention. In a method disclosed in an embodiment of the invention, a pre-packaged pet meal is provided by placing a pet food in a receptacle portion of a container. In this embodiment, a sealing means is used to provide freshness to the pet food which may be removed for access to the pet food. Optionally, in this embodiment a removable cover is provided that may be reclosable on the container once it is opened. A substantially transparent portion is provided on the pre-packaged pet meal in this embodiment, such that at least a part of the pet food can be viewed by consumers prior to purchase or other use. Other variations of the method will be readily apparent based on the various embodiment of the container herein.

All documents cited herein are, in relevant part, incorporated herein by reference; the citation of any document is not to be construed as an admission that it is prior art with respect to the present invention.

While particular embodiments of the present invention have been illustrated and described, it would be obvious to those ordinarily skilled in the art that various other changes and modifications can be made without departing from the scope of the invention, as defined by the appended claims.

## Claims

1. A container **characterized by**:
(a) a body (12) comprising a base structure (13) having peripherally continuous side walls (11) extending therefrom and providing a receptacle (10) having an open mouth (14) opposing said base structure (13);
(b) at least one pet food (32) residing within said receptable (10);
(c) a removable seal (18) covering said open mouth (14):
(d) a recloseable cover (16) attached to said sidewalls (11) ; and
(e) a substantially transparent portion (20) of said container which allows at least a part of said pet food to be viewed, wherein said container further comprises a hinged mechanism (22) disposed between and affixed to a portion of said body (12) and a portion of said cover (16).

2. The container according to Claims 1 and 2, wherein said substantially transparent portion (20) is at least a part of said cover (16).

3. The container according to claims 1 to 3, wherein a substantially transparent portion (20) is at least a part of said seal (18) and is at least partially aligned with said substantially transparent portion (20) on at least a part of said cover (16), such that at least a part of said pet food (32) can be viewed.

4. The container according to any of the preceding Claims, wherein said seal (18) releasably attached to said peripherally continuous sidewalls (11) at said open mouth (14).

5. The container according to any of the preceding Claims, wherein said substantival transparent portion (20) is at least a part of said seal (18), such that at least part of said pet food can be viewed.

6. The container according to any of the preceding Claims, wherein said container is made from plastic.

7. The container according to any of the preceding Claims, wherein said pet food (32) is a wet pet food.

8. The container according to any of the preceding Claims, wherein said cover (16) is dimensioned for receiving said base structure (13) for stacking said containers.

## Patentansprüche

1. Behälter, der **gekennzeichnet ist durch**:
(a) einen Körper (12), der eine Grundstruktur (13) mit umfänglich durchgehenden Seitenwänden (11) hat, die sich von dieser erstrecken und eine Aufnahme (10) mit einem der Grundstruktur (13) entgegengesetzten offenen Bereich bereitstellen;
(b) mindestens ein Haustierfutter (32), das sich in der Aufnahme (10) befindet;
(c) eine abnehmbare Versiegelung (18), welche den offenen Bereich (14) abdeckt;
(d) einen wiederverschließbaren Deckel (16), der an den Seitenwänden (11) angebracht ist; und
(e) einen im Wesentlichen transparenten Abschnitt (20) des Behälters, der es ermöglicht, dass zumindest ein Teil des Haustierfutters gesehen werden kann, wobei der Behälter darüber hinaus einen Anlenkmechanismus (22) hat, der zwischen einem Abschnitt des Körpers (12) und einem Abschnitt des Deckels (16) angeordnet und daran befestigt ist.

2. Behälter nach Anspruch 1 und 2, wobei es sich bei dem im Wesentlichen transparenten Abschnitt (20) um zumindest einen Teil des Deckels (16) handelt.

3. Behälter nach den Ansprüchen 1 bis 3, wobei ein im Wesentlicher transparenter Abschnitt (20) zumindest ein Teil der Versiegelung (18) ist und zumindest teilweise mit dem im Wesentlichen transparenten Abschnitt (20) an zumindest einem Teil des Deckels (16) ausgerichtet ist, so dass zumindest ein Teil des Haustierfutters (32) gesehen werden kann.

4. Behälter nach einem der vorhergehenden Ansprüche, wobei die Versiegelung (18) lösbar an den umfänglich durchgehenden Seitenwänden am offenen Bereich (14) angebracht ist.

5. Behälter nach einem der vorhergehenden Ansprüche, wobei der im Wesentlichen transparente Abschnitt (20) zumindest ein Teil der Versieglung (18) ist, so dass zumindest ein Teil des Haustierfutters gesehen werden kann.

6. Behälter nach einem der vorhergehenden Ansprüche, wobei der Behälter aus Kunststoff besteht.

7. Behälter nach einem der vorhergehenden Ansprüche, wobei es sich bei dem Haustierfutter (32) um ein Haustiernassfutter handelt.

8. Behälter nach einem der vorhergehenden Ansprüche, wobei der Deckel (16) zur Aufnahme der Grundstruktur (13) bemessen ist, um die Behälter zu stapeln.

## Revendications

1. Contenant **caractérisé par** :
(a) un corps (12) comprenant une structure de base (13) présentant des parois latérales (11) périphériquement continues s'étendant depuis celle-ci et fournissant une cavité (10) présentant une partie ouverte (14) opposée à ladite structure de base (13) ;
(b) au moins un aliment pour animal de compagnie (32) situé dans ladite cavité (10) ;
(c) un joint (18) amovible recouvrant ladite partie ouverte (14) ;
(d) un couvercle (16) refermable attaché auxdites parois latérales (11) ; et
(e) une partie (20) sensiblement transparente dudit contenant qui permet à au moins une partie dudit aliment pour animal de compagnie d'être regardé, sachant que ledit contenant comprend en outre un mécanisme sur charnière (22) disposé entre et fixé à une partie dudit corps (12) et une partie dudit couvercle (16).

2. Le contenant selon la revendication 1 à 2, sachant que ladite partie (20) sensiblement transparente est au moins une partie dudit couvercle (16).

3. Le contenant selon les revendications 1 à 3, sachant qu'une partie (20) sensiblement transparente est au moins une partie dudit joint (18) et est au moins partiellement alignée avec ladite partie (20) sensiblement transparente sur au moins une partie dudit couvercle (16), de telle sorte qu'au moins une partie dudit aliment pour animal de compagnie (32) puisse être regardée.

4. Le contenant selon l'une quelconque des revendications précédentes, sachant que ledit joint (18) est attaché de façon détachable auxdites parois latérales (11) périphériquement continues au niveau de ladite partie ouverte (14).

5. Le contenant selon l'une quelconque des revendications précédentes, sachant que ladite partie (20) sensiblement transparente est au moins une partie dudit joint (18), de telle sorte qu'au moins une partie dudit aliment pour animal de compagnie puisse être regardé.

6. Le contenant selon l'une quelconque des revendications précédentes, sachant que ledit contenant est composé de plastique.

7. Le contenant selon l'une quelconque des revendications précédentes, sachant que ledit aliment pour animal de compagnie (32) est un aliment mouillé pour animal de compagnie.

8. Le contenant selon l'une quelconque des revendications précédentes, sachant que ledit couvercle (16) est dimensionné pour recevoir ladite structure de base (13) afin d'empiler lesdits contenants.
